# EUROPEAN PATENT APPLICATION

(11) **EP 2 391 163 A1**
(43) Date of publication of application: **30.11.2011**
(21) Application number: 10733482.3
(22) Date of filing: 20.01.2010
(51) Int. Cl.: H04W 48/16, H04B 1/707, H04W 16/00, H04W 56/00, H04W 92/20

(54) **RADIO BASE STATION, MOBILE STATION AND MOBILE COMMUNICATION METHOD**

(30) Priority: 20.01.2009 JP 2009010302
(71) Applicant: NTT DOCOMO, INC., Chiyoda-ku Tokyo 100-6150 (JP)
(72) Inventor: ZUKAWA, Hiroki, Tokyo 100-6150 (JP)
(74) Representative: HOFFMANN EITLE
(86) International application number: PCT/JP2010/050615
(87) International publication number: WO 2010/084875

(57) **Abstract**

A radio base station BTS of the present invention is configured to perform three-step cell search to detect a plurality of paths #1 through #8 transmitted from neighboring radio base stations BTSs around the radio base station and to identify scrambling code on the detected paths, wherein the paths #2, #4, #5, #6 having quality of a PSCH (primary Synchronization channel) lower than a reference value is excluded from scrambling code identification.

## Description

### TECHNICAL FIELD

The present invention relates to a radio base station, a mobile station, and a mobile communication method.

### BACKGROUND ART

In a WCDMA mobile communication system, "three-step cell search" is conventionally known as a efficient method to perform receive timing synchronization and scrambling code identification procedure on a downlink signal.

Hereinafter, in this description, "three-step cell search (or cell search) " denotes procedure from "receive timing detection (slot synchronization) of PSCH (Primary Synchronization Channel)" to "scrambling code identification".

In general, the cell search is a procedure performed by a mobile station UE to determine a cell with which the mobile station UE will communicate. Specifically, the cell search is performed on a path which has the best quality PSCH.

However, it is possible to perform more advanced cell search when the cell search is performed on multiple paths to acquire information on multiple neighboring cells. For example, a radio base station can set operational parameters based on a result of the cell search in order to set the parameters in a "Plug & Play" method.

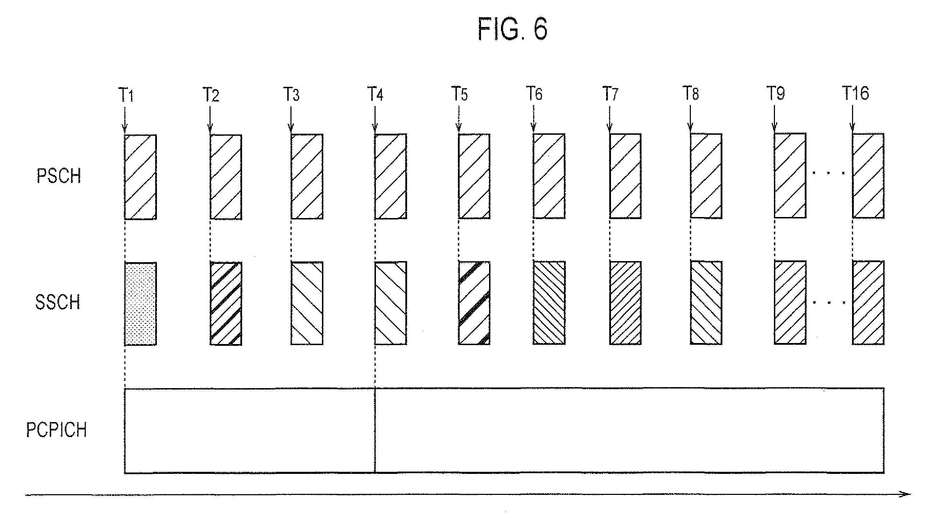

Hereinafter, referring to Fig. 6, the above-described cell search is briefly described. The cell search includes the following procedure of "Step 1", "Step 2", and "Step 3".

### <Step 1 (Slot Synchronization)>

As shown in Fig. 6, firstly, receive timings of PSCH transmitted from neighboring cells are detected by using a PSCH code (in other words, a code assigned to the PSCH) which is stored in advance, and slot timings T1 to T16 are detected based on the detected PSCH receive timings.

Here, in the WCDMA mobile communication system, the PSCH code is common to all the cells, and is already known to a mobile station UE and a radio base station.

### <Step 2 (Frame Synchronization and Scrambling Code Group Identification)>

Secondly, at each of the slot timings T1 to T16 detected by using the PSCH, correlation values with SSCHs are calculated by using multiple codes (SSCH codes) assigned to SSCHs (Secondary Synchronization Channels).

The frame synchronization and the scrambling code group identification are performed based on the calculated correlation values with SSCHs at each slot timing T1 to T16. In the example of Fig. 6, the frame timing is determined as "T4".

Here, in the WCDMA mobile communication system, there are "16 patterns" of SSCH codes, which are known to a mobile station UE and a radio base station.

In addition, the SSCH transmission pattern is different among scrambling code groups and a relationship among the SSCH transmission pattern, the frame timing, and the scrambling code group is also known to the mobile station UE and the radio base station BTS.

Thus, the frame synchronization and the scrambling code group identification can be performed based on the SSCH transmission pattern.

### <Step 3(Scrambling Code Identification)>

Thirdly, at the determined frame timing T4, it calculates correlation values with each scrambling code of the scrambling code group to identify the scrambling code.

Here, in the WCDMA mode mobile communication system, there are "8 patterns" of scrambling codes assigned to each scrambling code group, and these scrambling codes are known to a mobile station UE and a radio base station BTS.

### PRIOR ART DOCUMENT

### PATENT DOCUMENT

Patent Document JP-A 2007-329758

### SUMMARY OF THE INVENTION

### PROBLEM TO BE SOLVED BY THE INVENTION

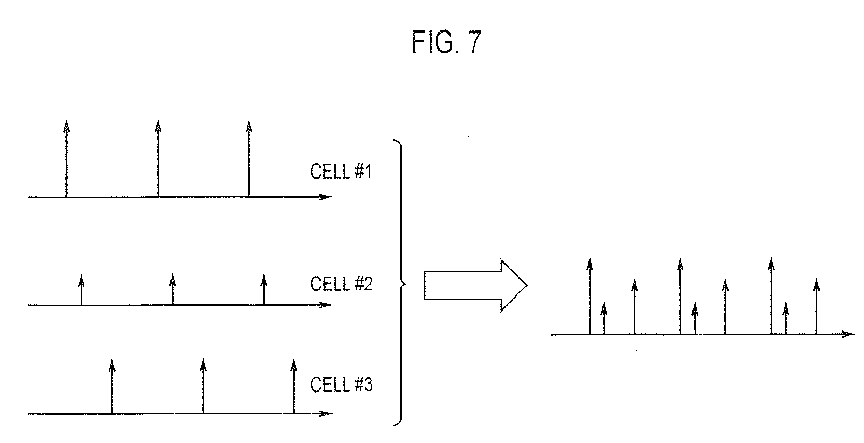

In general, receiving state of PSCHs is complicated where signals are received from multiple cells as shown in Fig. 7.

In the conventional WCDMA mobile communication system, a mobile station only has to perform the cell search on the path which has the highest correlation value with PSCH in the case of selecting a cell with the best quality as a serving cell, or in other similar cases.

However, the mobile station has to perform the cell search on the multiple paths in order to perform processing based on the propagating state of multiple neighboring cells in "Plug & Play" or the like.

The quality of a channel other than PSCH/SSCH in the neighboring cells (CPICH (Common Pilot Channel) or the like) is known only after the cell search is completed. Thus, in one possible case, even though the cell search is performed, the information of the cell is not used because a desired channel does not have a required quality.

In this case, the cell search is performed on the path on which the cell search procedure does not need to be performed, and thereby there is a problem that the procedure is unnecessarily performed.

The present invention has been made in view of the aforementioned problem. Accordingly, an objective of the present invention is to provide a radio base station, a mobile station, and a mobile communication method that are capable of performing more efficient cell search.

### MEANS FOR SOLVING THE PROBLEMS

The first feature of the present invention is summarized in that a radio base station which performs three-step cell search to detect a plurality of paths transmitted from neighboring radio base stations around the radio base station and to identify scrambling code on the detected paths, wherein a path having a first synchronization channel quality lower than a reference value is excluded from scrambling code identification.

The second feature of the present invention is summarized in that a mobile station which performs three-step cell search to detect a plurality of paths transmitted from neighboring radio base stations around the mobile station and to identify scrambling code on the detected paths, wherein a path having a first synchronization channel quality lower than a reference value is excluded from the scrambling code identification.

The third feature of the present invention is summarized in that a mobile communication method of performing three-step cell search to detect a plurality of paths transmitted from neighboring radio base stations around an apparatus itself and to identify scrambling code on the detected paths, wherein
a path having a first synchronization channel quality lower than a reference value is excluded from the scrambling code identification.

### EFFECTS OF THE INVENTION

As described above, the present invention can provide a radio base station, a mobile station, and a mobile communication method that are capable of performing more efficient cell search.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a radio base station according to the first embodiment of the present invention.
[Fig. 3] Fig. 3 is a drawing for illustrating cell search procedure which is performed by the radio base station according to the first embodiment of the present invention.
[Fig. 4] Fig. 4 is a flowchart illustrating the operation of the radio base station according to the first embodiment of the present invention.
[Fig. 5] Fig. 5 is a functional block diagram of a mobile station according to Modification 1 of the present invention.
[Fig. 6] Fig. 6 is a drawing for illustrating cell search procedure which is performed by a conventional radio base station.
[Fig. 7] Fig. 7 is a drawing for illustrating cell search procedure which is performed by a conventional radio base station.

### MODES FOR CARRYING OUT THE INVENTION

### (Configuration of Mobile Communication System according to First Embodiment of the Invention)

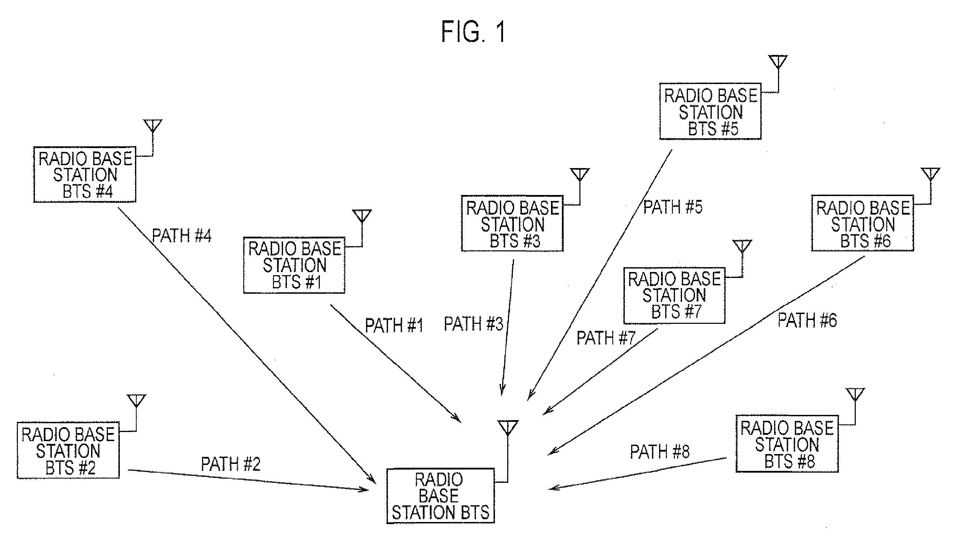

Referring to Figs. 1 through 3, the configuration of a mobile communication system according to a first embodiment of the invention is described.

As shown in Fig. 1, in the mobile communication system according to the present embodiment, radio base stations BTS #1 to BTS #8 are located around a radio base station BTS. The radio base station BTS can receive signals transmitted in cells #1 to #8 in the radio base stations BTS #1 to #8.

Note that the mobile communication system according to the present embodiment may be any of a WCDMA mobile communication, system, an LTE (Long Term Evolution) mobile communication system, and other mobile communication systems as long as the system uses the "cell search " such as the "three-step cell search".

The radio base stations BTS #1 to #8 according to the present embodiment may be radio base stations for macro cells which are managed by a mobile carrier, and the like or may be radio base stations for femto cells which are manages by subscribers of mobile communication services provided by the mobile carrier.

Note that the radio base station BTS may be also a radio base station for a macrocell managed by a mobile carrier and the like or may be a radio base station for a femto cell managed by a subscriber of mobile communication services provided by the mobile carrier.

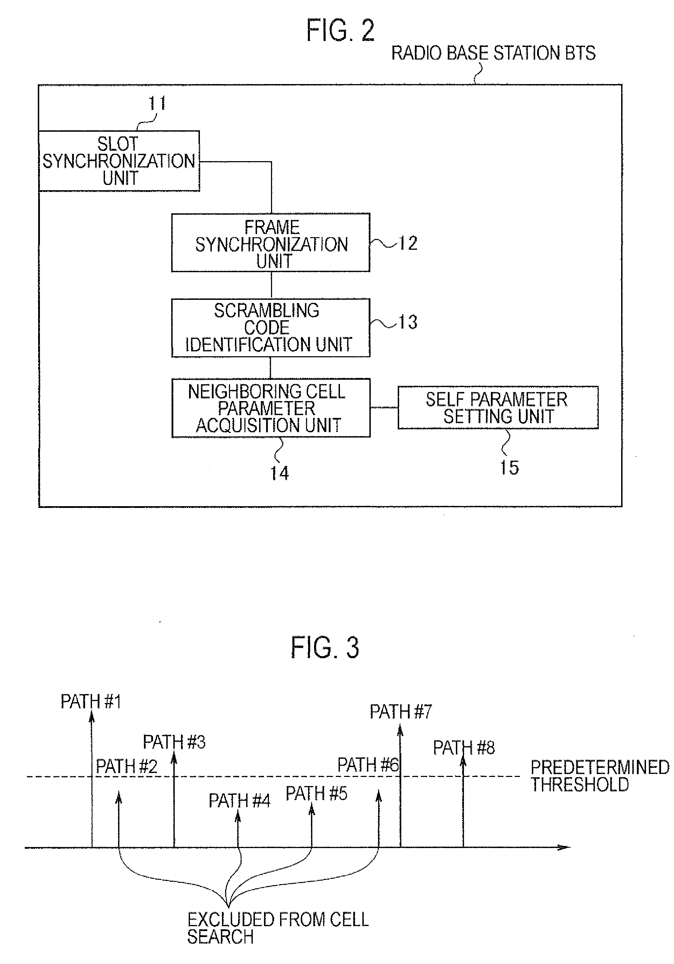

As shown in Fig. 2, the radio base station BTS includes a slot synchronization unit 11, a frame synchronization unit 12, a scrambling code identification unit 13, a neighboring cell parameter acquisition unit 14, and a self parameter setting unit 15.

Using a PSCH code stored in advance, the slot synchronization unit 11 detects receive timing of PSCH (primary synchronization channel) transmitted in the neighboring cells (cells #1 to #8).

Specifically, the slot synchronization unit 11 calculates a correlation value with the PSCH code at each chip timing, and determines that a path exists if the above-described correlation value is equal to or larger than a predetermined value.

Here, in the WCDMA mobile communication system, the PSCH code is common to all the cells, and is already known to a mobile station UE and a radio base station BTS.

The frame synchronization unit 12 performs the frame synchronization procedure and the scrambling code group identification procedure on the paths detected by the slot synchronization unit 11. However, as shown in Fig. 3, the frame synchronization unit 12 is configured not to perform the cell search procedure of and after step 2 on the paths #2, #4, #5, and #6 each of which has a PSCH quality lower than a predetermined threshold value.

For example, the receiving power, Ec/I₀, SIR, or the like may be used as the quality. In addition, the predetermined threshold may be a parameter set in the radio base station BTS or may be notified from a network device.

The frame synchronization unit 12 is configured to calculate correlation values with the SSCHs at each slot timing of each of the paths #1, #3, #7, and #8, among the paths detected by the slot synchronization unit 11, which has a PSCH quality equal to or higher than a predetermined threshold and to determine the frame timing and scrambling code group of each of the paths #1, #3, #7, and #8 based on the calculated correlation value.

In short, the frame synchronization unit 12 is configured to perform the procedure of step 2 each of the paths #1, #3, #7, and #8 but not to perform the procedure of step 2 on each of the paths #2, #4, #5 and #6.

Here, in the WCDMA mobile communication system, there are "16 patterns" of the SSCH codes, which are known to the mobile station UE and the radio base station BTS.

In addition, the SSCH transmission pattern is different among the scrambling code groups and a relationship among the SSCH transmission pattern, the frame timing, and the scrambling code group is known to the mobile station UE and the radio base station BTS. Accordingly, the frame synchronization procedure and the scrambling code group identification procedure can be performed based on the SSCH transmission pattern.

The scrambling code identification unit 13 is configured to identify scrambling codes on the paths #1, #3, #7 and #8 based on the frame timing and scrambling code group determined by the frame synchronization unit 12 at step 2.

In other words, the scrambling code identification unit 13 is configured to perform the procedure of step 3 on each of the paths #1, #3, #7, and #8 but not to perform the procedure of Step 3 on each of the paths #2, #4, #5 and #6.

Here, in the WCDMA mobile communication system, there are "8 patterns" of scrambling codes assigned to each scrambling code group, which are already known to the mobile station UE and the radio base station BTS.

The neighboring cell parameter acquisition unit 14 is configured to acquire information on the neighboring cells based on the result acquired by the scrambling code identification unit 13. The information on the neighboring cells acquired by the neighboring cell parameter acquisition unit 14 may be broadcast information or information on other channels.

The self parameter setting unit 15 is configure to automatically set an operational parameter based on the information acquired by the neighboring cell information acquisition unit 14.

Here, possible operational parameters include, but not particularly limited to, a scrambling code, a frequency, transmission power, or the like is used in a cell under the control of the radio base station BTS.

### (Operation of Mobile Communication System according to First Embodiment of the Invention)

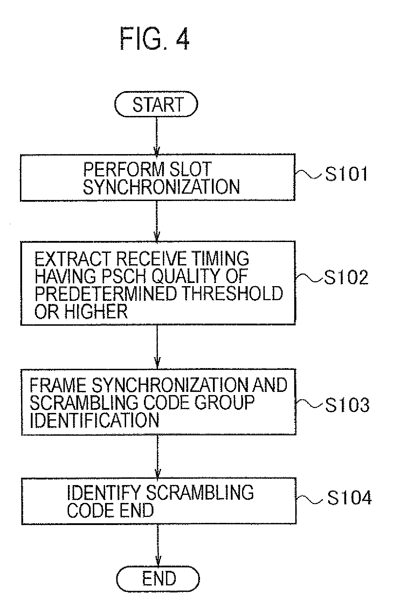

Referring to Fig. 4, in the mobile communication system according to the first embodiment of the present invention, the description is given of an operation of the cell search (three-step cell search) to be performed by the radio base station BTS.

As shown in Fig. 4, at step S101, the radio base station BTS performs slot synchronization. In other words, the receive timing of the PSCH #1 to #8 transmitted in the neighboring cells #1 to #8 is detected by using the PSCH code which is stored in advance.

At step S102, the radio base station BTS detects timing of the detected PSCH having a quality equal to or higher than a predetermined threshold, in other words, the receive timing of the paths #1, #3, #7 and #8 having a quality equal to or higher than a predetermined threshold.

At step S103, the radio base station BTS performs the frame synchronization and the scrambling code group identification on each of the paths #1, #3, #7 and #8 detected at step S102.

In other words, the radio base station BTS calculates a correlation value with each SSCH at each slot timing detected for each path at step S102 and performs the frame synchronization and the scrambling code group identification based on the SSCH transmission pattern acquired as a result thereof.

At step S104, the radio base station BTS performs the scrambling code identification on each of the paths #1, #3, #7 and #8 on which the frame synchronization and the scrambling code group identification are performed at step S103.

In other words, the radio base station BTS calculates a correlation value with each scrambling code within the scrambling code group based on the frame timing and the scrambling code group determined at step S103.

### (Advantageous Effects of Mobile Communication System according to First Embodiment of the Invention)

The radio base station BTS which is used in the mobile communication system according to the first embodiment of the present invention can shorten time required for the cell search by excluding a path having a PSCH quality lower than a predetermined threshold from the cell search procedure. As a result, the time required for service interruption which is caused when an operational parameter is set in the radio base station BTS can be shortened.

### (Modification 1)

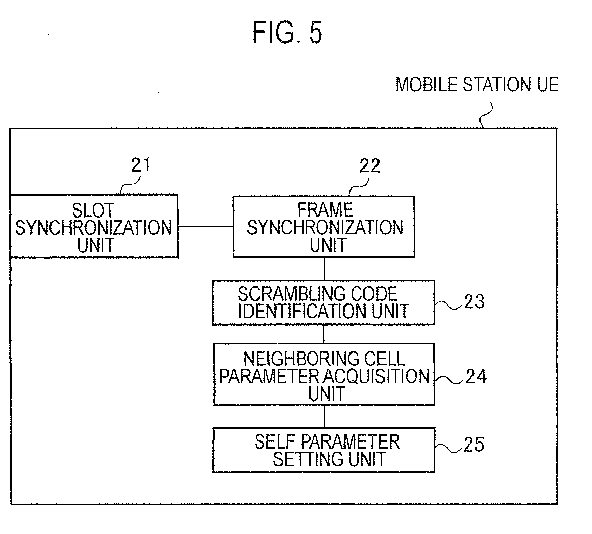

Hereinafter, referring to Fig. 5, a mobile Communication system according to Modification 1 of the present invention is described. The mobile communication system according to Modification 1 is similar to the mobile communication system according to the above-described first embodiment, except that the cell search performed by the radio base station BTS according to the first embodiment is performed by a mobile station UE.

As shown in Fig. 5, the mobile station UE includes a slot synchronization unit 21, a frame synchronization unit 22, a scrambling code identification unit 23, a neighboring cell parameter acquisition unit 24, and a self parameter setting unit 25.

The slot synchronization unit 21 is configured to detect receive timing of the PSCH #1 to #8 which is transmitted from the neighboring cells (cells #1 to #8) by using a PSCH code which is stored in advance.

The frame synchronization unit 22 is configured to calculate a correlation value with each SSCH at each slot timing of each of the paths #1, #3, #7, and #8, among the paths detected by the slot synchronization unit 21, which has a PSCH quality equal to or higher than a predetermined threshold and to determine the frame timing and scrambling code group of the paths #1, #3, #7, and #8 based on the calculated correlation value.

The scrambling code identification unit 23 is configured to identify scrambling codes on the paths #1, #3, #7 and #8 based on the frame timing and the scrambling code group determined by the frame synchronization unit 11.

The acquisition unit 24 is configured to acquire information on the neighboring cells based on the result acquired by the scrambling code identification unit 23.

The self parameter setting unit 25 is configured to automatically set a self parameter for the mobile station UE itself, based on the information acquired by the neighboring cell parameter acquisition unit 24.

The above-described characteristics of the present embodiment may be expressed as follows.

A first characteristic of the present embodiment is a radio base station BTS configured to perform three-step cell search to detect multiple paths #1 to #8 transmitted from neighboring radio base stations BTSs #1 to #8 around the radio base station BTS itself and to perform scrambling code identification on the detected paths #1 to #8, wherein the paths #2, #4, #5 and #6 each having a PSCH (primary synchronization channel) quality lower than a reference value are excluded from scrambling code identification.

The first characteristic of the present embodiment may include a neighboring cell parameter acquisition unit 14 configured to acquire cell information transmitted in the cells #1, #3, #7 and #8 corresponding to the scrambling codes identified by the scrambling code identification procedure.

The first characteristic of the present embodiment may include a self parameter setting unit 15 configured to automatically set an operational parameter based on cell information acquired by the neighboring cell parameter acquisition unit 14.

A second characteristic of the present embodiment is a mobile station UE configured to perform three-step cell search to detect multiple paths #1 to #8 transmitted from neighboring radio base stations BTSs #1 to #8 around the mobile station UE itself and to perform scrambling code identification on the detected paths #1 to #8, wherein the paths #2, #4, #5 and #6 each having a PSCH quality lower than a reference value are excluded from scrambling code identification.

The second characteristic of the present embodiment may include a neighboring cell parameter acquisition unit 24 configured to acquire cell information transmitted in the cells #1, #3, #7 and #8 corresponding to the scrambling codes identified by the scrambling code identification.

The second characteristic of the present embodiment may include a self parameter setting unit 25 configured to automatically set an operational parameter based on cell information acquired by the neighboring cell parameter acquisition unit 24.

A third characteristic of the present embodiment is a mobile communication method of performing three-step cell search to detect multiple paths #1 to #8 transmitted from neighboring radio base stations #1 to #8 around an apparatus itself and to perform scrambling code identification on the detected paths #1 to #8, wherein the paths #2, #4, #5 and #6 each having a PSCH quality lower than a reference value are excluded from scrambling code identification.

Note that operations of the above-described radio base station BTS and mobile station UE may be implemented by hardware or may be implemented by a software module to be executed by a processor, or may be implemented in combination of the both.

The software module may be provided in any type of storage medium such as a RAM (Random Access Memory), a flash memory, a ROM (Read Only Memory), an EPROM (Erasable Programmable ROM), an EEPROM (Electronically Erasable and Programmable ROM), a register, a hard drive, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the radio base station BTS or the mobile station UE. Also, the storage medium and the processor may be provided in the radio base station BTS or the mobile station UE as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A radio base station configured to perform three-step cell search to detect a plurality of paths transmitted from neighboring radio base stations around the radio base station and to identify scrambling code on the detected paths, **charaterized in that**:
a path having a primary synchronization channel quality lower than a reference value is excluded from scrambling code identification.

2. The radio base station according to claim 1, further comprising a neighboring cell parameter acquisition unit configured to acquire cell information transmitted in a cell corresponding to a scrambling code identified by the scrambling code identification procedure.

3. The radio base station according to claim 2, further comprising a self parameter setting unit configured to automatically set an operational parameter based on the cell information acquired by the neighboring cell parameter acquisition unit.

4. A mobile station configured to perform three-step cell search to detect a plurality of paths transmitted from neighboring radio base stations around the mobile station and to identify scrambling code on the detected paths, **characterizing in that**:
a path having a primary synchronization channel quality lower than a reference value is excluded from scrambling code identification.

5. The mobile station according to claim 4, further comprising a neighboring cell parameter acquisition unit configured to acquire cell information transmitted in a cell corresponding to a scrambling code identified by the scrambling code identification procedure.

6. The mobile station according to claim 5, comprising a self parameter setting unit configured to automatically set an operational parameter based on the cell information acquired by the neighboring cell parameter acquisition unit.

7. A mobile communication method of performing three-step cell search to detect a plurality of paths transmitted from neighboring radio base stations around an apparatus itself and to identify scrambling code on the detected paths, **characterizing in that**:
a path having a primary synchronization channel quality lower than a reference value is excluded from scrambling code identification.
